# EUROPÄISCHE PATENTSCHRIFT

(11) **EP 2 330 720 B1**
(45) Veröffentlichungstag und Bekanntmachung des Hinweises auf die Patenterteilung: **15.08.2012**
(21) Anmeldenummer: 09178068.4
(22) Anmeldetag: 04.12.2009
(51) Int. Cl.: H02K 11/00, H02K 21/22, H02K 7/08, H02K 15/14

(54) **Elektrischer Außenläufermotor mit einem Gehäuse und einem Formteil zum Führen elektrischer Leiter, die mit einem Strangpressverfahren hergestellt sind**
Electric motor with external rotor having a housing and support for electric cables formed by extrusion
Moteur électrique à rotor extérieur doté d'un carter et d'un support de conducteurs formés par extrusion

(43) Veröffentlichungstag der Anmeldung: 08.06.2011
(73) Patentinhaber: ebm-papst Mulfingen GmbH & Co. KG, 74673 Mulfingen (DE)
(72) Erfinder: Best, Dieter, 74653 Ingelfingen (DE); Ehmann, Tobias, 74626 Bretzfeld Unterheimbach (DE); Sauer, Thomas, 65510 Idstein (DE); Sturm, Gerhard, 74673 Mulfingen (DE)
(74) Vertreter: Solf, Alexander

(56) Entgegenhaltungen:
- EP-A2- 1 950 870
- DE-A1-102007 035 271
- DE-U1- 20 105 671

## Beschreibung

Die vorliegende Erfindung betrifft einen Elektromotor, insbesondere EC-Außenläufermotor bestehend aus einem Statorteil und einem dieses umfassenden Außenläufer-Rotorteil, das mittels einer Rotorwelle im Statorteil drehbar gelagert ist, sowie einem einendig am Statorteil angeordneten Statorflansch sowie am gegenüberliegenden Ende des Statorteils angeordnete elektrische Steuereinheiten sowie einem zwischen dem Statorflansch und der Steuereinheit angeordneten Gehäuse, das das Rotorteil umschließt, sowie aus einer am Statorteil angeordneten Motorleiterplatte, die über elektrische Leiter mit der elektrischen Steuereinheit elektrisch verbunden ist.

Ein derartiger Elektromotor ist z. B. aus dem DE-U-20105671.2 bekannt. Bei einem derartigen Elektromotor ist für jede Baugröße einer Typenreihe ein spezielles Motorgehäuse und ein dazu passendes Elektronikgehäuse erforderlich. Hierdurch ergeben sich ein großer Fertigungsaufwand und hohe Fertigungs- und Lagerkosten.

Aus der DE 201 05 671 U1 ist eine Kühlungsanordnung für einen Elektromotor bekannt, wobei die Motorelektronik gegen einen direkten Kontakt mit dem Kühlluftstrom gekammert in einem von einem Kühlkörper begrenzten Gehäuseraum angeordnet ist. Hierbei wird der Kühlluftstrom derart an dem Gehäuseraum vorbeigeführt, dass er den Kühlkörper auf einer von der Motorelektronik abgekehrten Außenseite überströmt, und wobei der Kühlkörper auf seiner der Motorelektronik zugekehrten Innenseite Kühlflächen aufweist, die in wärmeleitendem Kontakt mit zu kühlenden Bauteilen der Motorelektronik stehen.

Aus der EP 1 950 870 A2 ist ein Elektromotorsystem bekannt, das aus mehreren Modulen aufgebaut ist, wobei wenigstens ein Motormodul mit einem eine Motorwelle antreibenden Elektromotor und ein Elektronikmodul mit einer Elektronik zur Ansteuerung des Elektromotors vorgesehen ist. Hierbei weisen die einzelnen Module ein Modulgehäuse auf, das aus einem Hohlprofil gebildet ist. Hierbei kann das jeweilige Modulgehäuse auf seiner Innenseite entsprechend der Funktionsweise der jeweiligen Moduleinheit unterschiedlich ausgebildet sein.

Der vorliegenden Erfindung liegt die Aufgabe zu Grunde, einen Elektromotor der eingangs beschriebenen Art derart zu verbessern, dass ein Gleichteilekonzept für eine gesamte Baureihe realisierbar und zudem eine hohe IP-Schutzart erreichbar ist.

Die IP-Schutzarten werden durch festgelegte Kurzzeichen angegeben, die sich aus den stets gleichen Buchstaben I und P und zwei Kennziffern für den vorhandenen Schutzgrad zusammensetzen. IP bedeutet dabei Schutz gegen Berührung und Eindringen von Fremdkörpern und Wasser. Die erste Kennziffer von 0 bis 5 gibt den Schutzgrad gegen Berührung und Eindringen von Fremdkörpern und die zweite Kennziffer von 0 bis 8 gibt den Schutzgrad gegen ein Eindringen von Wasser an.

Erfindungsgemäß wird dies dadurch erreicht, dass das Gehäuse als Strangpressprofilteil ausgebildet und innerhalb des Gehäuses zwischen dem Rotor und einer Gehäuseinnenwandung eine Steckerschiene angeordnet ist, die aus einem aus elektrisch isolierenden Material bestehenden, in Umfangsrichtung des Rotorteils flexiblen, ein Zwischenprofilteil bildenden Strangpressformteil besteht, das in Längsrichtung der Rotorwelle verlaufende Führungskanäle zum Führen und Fixieren der elektrischen Leiter aufweist. Die Erfindung basiert somit darauf, dass durch die Ausbildung sowohl des Gehäuses als auch der Steckerschiene als Strangpressformteil diese in beliebiger Länge abgelängt bzw. hergestellt werden können, weil dieselbe Grundform erhalten bleibt. Die unterschiedlichen Leistungsbereiche einer Motor-Baugröße können über die Länge des Motors, d. h. über die Länge des Rotors und des Stators abgedeckt werden, wobei die Anpassung des Gehäuses und der elektrischen Leitungsführung einfach durch unterschiedliche Längen der Strangpressformteile bei im Übrigen gleichem Grundaufbau des Elektromotors erreicht wird. Hierdurch ergibt sich ein Gleichteilekonzept über die gesamte Baureihe. Hierfür ist weiterhin von Vorteil, wenn der Stator des erfindungsgemäßen Motors mit einem Statorflansch versehen ist, der alle bei Normmotoren bekannte Flanschformen in Bezug auf deren Befestigungsmöglichkeit abbildet, wobei erfindungsgemäß unterschiedliche Bohrungen am Außenrand des Statorflansches und Gewinde-Sacklöcher im mittleren Bereich des Statorflansches vorgesehen sind, so dass hierdurch die Dichtigkeit des Motors nicht beeinflusst wird. Insbesondere die Ausbildung des Gehäuses als geschlossenes Profil in Verbindung mit einer stirnseitigen Anordnung eines Tragrings zwischen dem Gehäuse und dem Elektronikgehäuse ermöglicht die Anordnung einer Abdichtung des Gehäuses derart, dass auch hohe IP-Schutzarten, z. B. IP 55 und IP 65 verwirklicht werden können. Zudem dient der Tragring als Tragelement für eine Adapter-Leiterplatte, die die Kontaktierung zur Steuerelektronik herstellt, wobei mittels des Tragrings eine Größenanpassung von im Durchmesser unterschiedlichen Elektronikgehäusen an das Gehäuse des Motors erfolgen kann oder eine hierzu umgekehrte Anpassung. Die in der Länge und im Biegeradius flexible Kontaktschiene ermöglicht eine große Variationsbreite der Kontaktierung, so dass sie für eine gesamte Baureihe eingesetzt werden kann. Durch das erfindungsgemäß vorgesehene Lüfterrad wird nicht nur die bekannte Kühlfunktion erfüllt, sondern es kann auch ein Magnet in das Lüfterrad integriert werden, so dass hierdurch auch mittels der Steuerelektronik eine Positionsmessung des Rotors erfolgen kann.

Vorteilhafte Ausbildungen der Erfindung sind in den Unteransprüchen enthalten und werden anhand der in den beiliegenden Zeichnungen dargestellten Ausführungsbeispiele näher beschrieben. Es zeigen:
- Fig. 1: einen Längsschnitt durch einen erfindungsgemäßen Elektromotor,
- Fig. 2: eine Explosionsansicht des Motors gemäß Fig. 1,
- Fig. 3: eine Außenansicht auf einen erfindungsgemäßen Statorflansch des Motors gemäß Fig. 1,
- Fig. 4: eine Innenansicht des Statorflansches gemäß Fig. 3,
- Fig. 5: eine Ansicht eines erfindungsgemäßen Gehäuses des Motors gemäß Fig. 1,
- Fig. 6a: eine Ansicht einer erfindungsgemäßen Steckerschiene des Motors gemäß Fig. 1,
- Fig. 6b: eine Explosionsdarstellung der Steckerschiene gemäß Fig. 6a,
- Fig. 7: eine Ansicht auf ein erfindungsgemäßes Zwischenprofilteil der Steckerschiene gemäß Fig. 6a,
- Fig. 8a: eine Ansicht auf ein erfindungsgemäßes Zwischenisolationsteil eines Motors gemäß Fig. 1 von der Seite des Statorflansches aus,
- Fig. 8b: eine Ansicht auf das Zwischenisolationsteil gemäß Fig. 8a von der gegenüberliegenden Seite aus,
- Fig. 9: eine Ansicht einer erfindungsgemäßen Motorleiterplatte des Motors gemäß Fig. 1,
- Fig. 10: eine Ansicht eines erfindungsgemäßen Lüfterrades des Motors gemäß Fig. 1,
- Fig. 11: eine Ansicht eines erfindungsgemäßen Elektromotors mit alternativer Ausbildung des Gehäuses.

In den verschiedenen Figuren der Zeichnungen sind gleiche Teile stets mit denselben Bezugsziffern gekennzeichnet und werden daher auch jeweils nur einmal beschrieben.

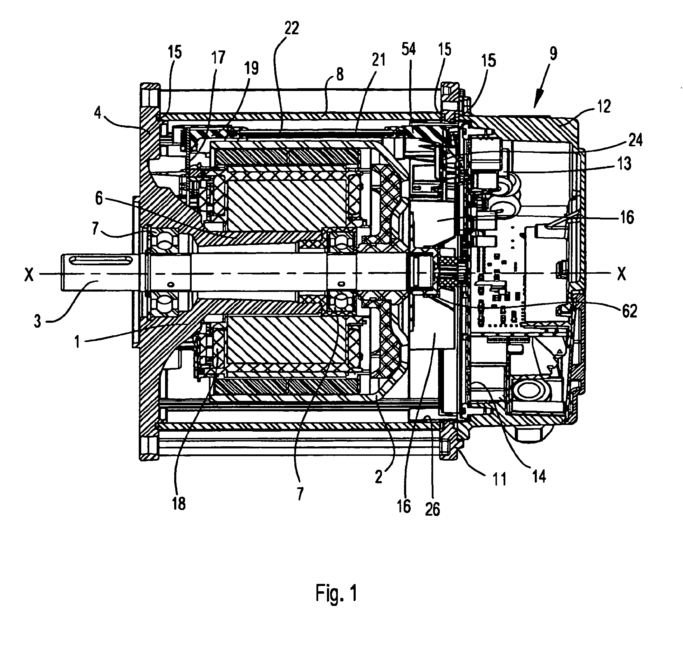

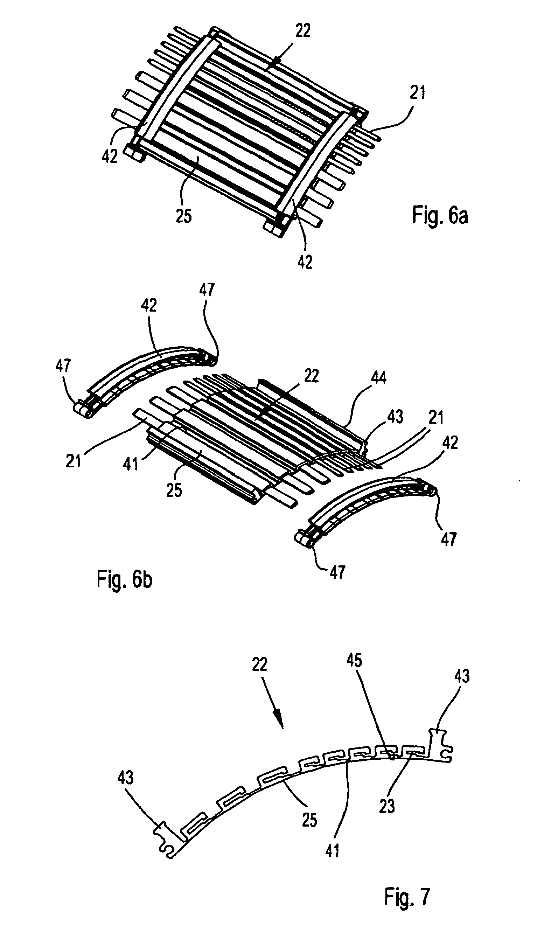

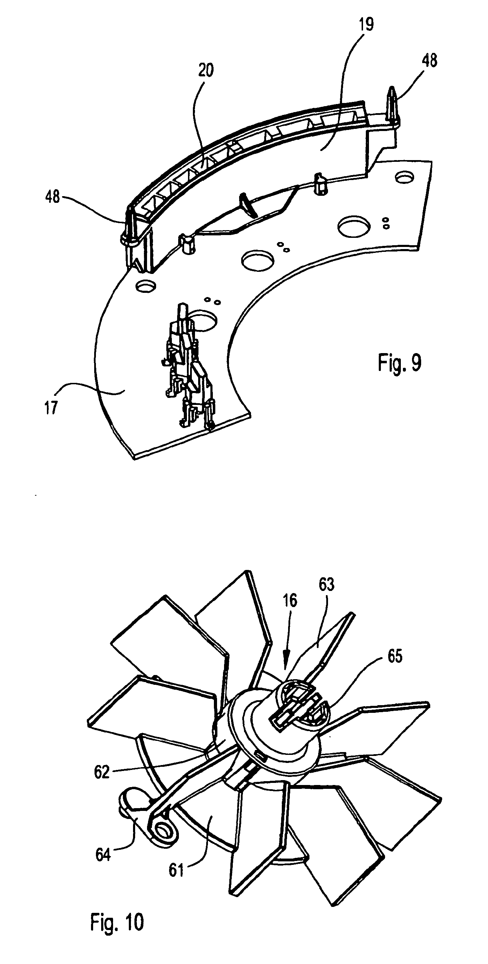

Ein erfindungsgemäßer Elektromotor, siehe Fig. 1, der als Außenläufermotor, insbesondere als EC-Motor, ausgebildet ist, besteht aus einem Statorteil 1 und einem dieses umfassenden Außenläufer-Rotorteil 2. Das Rotorteil 2 ist mittels einer Rotorwelle 3 im Statorteil 1 drehbar gelagert. Das Statorteil 1 besitzt einen Statorflansch 4, an dem eine Statorbuchse 6 ausgebildet ist. In der Statorbuchse 6 ist die Rotorwelle 3 über Lager 7 gelagert. Weiterhin weist der erfindungsgemäße Elektromotor ein Gehäuse 8 auf, das das Rotorteil 2 umfasst. Das Gehäuse 8 liegt einendig am Statorflansch 4 an, und an seinem dem Statorflansch 4 gegenüberliegenden Ende ist eine Steuereinheit 9 über einen Tragring 11 mit dem Gehäuse 8 verbunden. Die Steuereinheit 9 besteht aus einem Elektronikgehäuse 12, in dem eine Steuerschaltung 13 angeordnet ist, die eine Leiterplatte 14 umfasst, auf der Bauteile der Steuerschaltung 13 angeordnet sind. Im Anlagebereich zwischen dem Statorflansch 4 und dem Gehäuse 8 einerseits und zwischen dem Gehäuse 8 und dem Tragring 11 andererseits sowie zwischen dem Tragring 11 und dem Elektronikgehäuse 12 sind vorzugsweise Dichtungen 15, insbesondere O-Dichtringe angeordnet, wodurch eine Schutzart bis zu IP 65 realisiert werden kann. Somit erfolgt eine Abdichtung des erfindungsgemäßen Elektromotors durch das Gehäuse 8 nach innen, weshalb vorteilhafterweise auf dem dem Statorflansch 4 gegenüberliegenden Ende der Rotorwelle 3 ein Lüfterrad 16 befestigt ist, das zur Motor-Eigenkühlung dient und einen durch den Motor insbesondere axial strömenden Luftstrom erzeugt, so dass die im Motor entstehende Wärme an das Gehäuse 8 übertragen werden kann, das vorteilhafterweise aus Metall besteht und als Strangpressprofil ausgebildet ist. Auf seiner Innenseite trägt der Statorflansch 4 eine Motorleiterplatte 17, an der Statorspulen 18 des Statorteils 1 mit ihren Spulenenden angeschlossen sind. Auf der kreisbogenförmigen Motorleiterplatte 17 ist ein Steckergehäuse 19 angeordnet, in dem Kontakte zum Anschluss der Statorspulenenden vorhanden sind. Die Motorleiterplatte 17 bzw. deren im Steckergehäuse 19 enthaltenen Kontakte sind über axial durch das Gehäuse 8 verlaufende elektrische Leiter 21 mit der Steuerschaltung 13 im Elektronikgehäuse 12 verbunden. Das aus Kunststoff bestehende Steckergehäuse 19 ist auf der Motorleiterplatte 17 durch eine Rastverbindung befestigbar. Das Steckergehäuse 19 ist kreisbogenförmig ausgebildet und weist Steckertaschen 20 zur Aufnahme von Gegenkontakten für die Steckkontaktenden der elektrischen Leiter 21 auf (s. Fig. 9). Die elektrischen Leiter 21 sind in einer Steckerschiene 22 angeordnet, die aus einem aus elektrisch isolierendem Material bestehenden, in Umfangsrichtung des Rotorteils 2 flexiblen, ein Zwischenprofilteil 25 bildenden Strangpressteil besteht, das in Längsrichtung der Rotorwelle 3 verlaufende Führungskanäle 23 besitzt, in denen die elektrischen Leiter 21 geführt und fixiert sind (siehe Fig. 6a, 6b, 7). Die Kontaktierung der elektrischen Leiter 21 mit der Leiterplatte 14 der Steuerschaltung 13 erfolgt über eine Adapter-Leiterplatte 24. Diese Adapter-Leiterplatte 24 ist zwischen dem Tragring 11 und dem Elektronikgehäuse 12 angeordnet. Diese Adapter-Leiterplatte 24 ist an einem Zwischen-Isolationsteil 26 befestigt und trägt Kontaktfedern und weitere elektrische Kontakte. Diese Adapter-Leiterplatte 24 ermöglicht einen durchmesservariablen Übergang zwischen den elektrischen Leitern 21 in der Steckerschiene 22 sowie ihren elektrischen Kontakten zum Kontaktieren der Steuerschaltung 13.

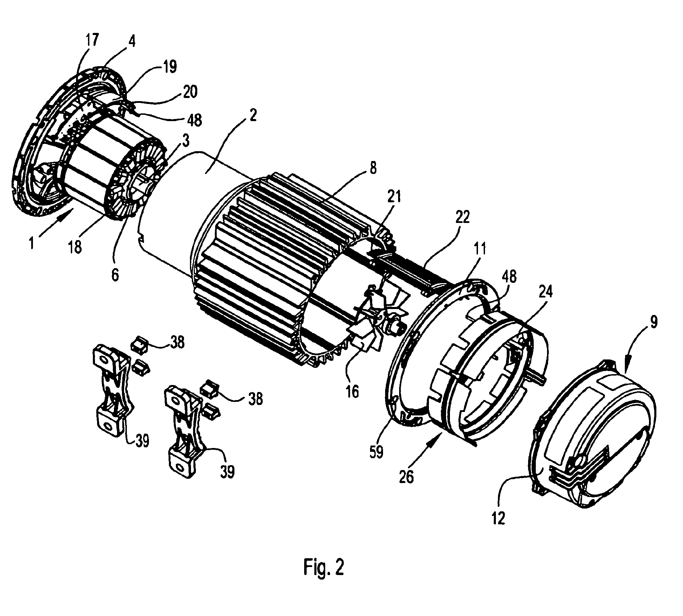

In Fig. 2 ist eine Explosionsansicht des erfindungsgemäßen Motors gemäß Fig. 1 dargestellt.

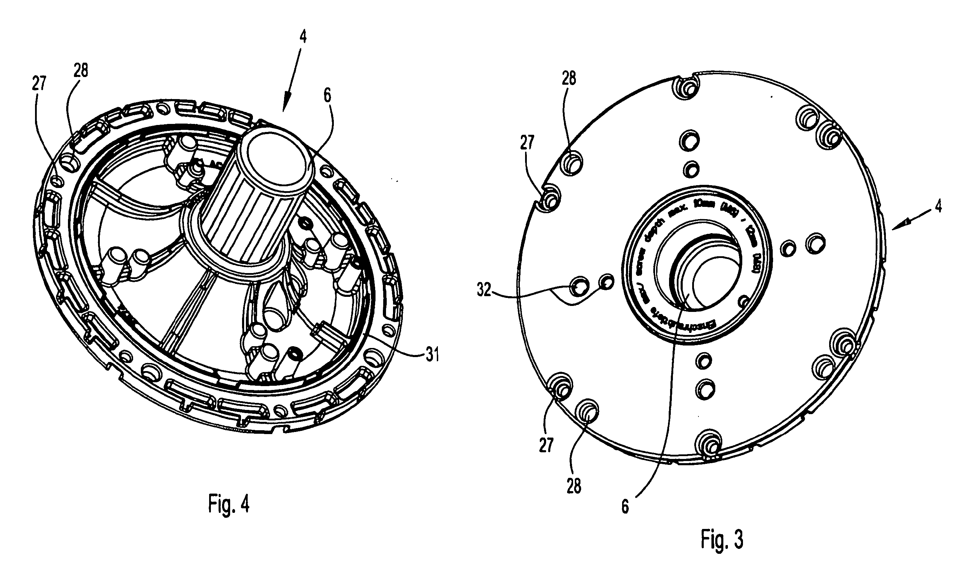

In den Fig. 3 und 4 ist jeweils ein erfindungsgemäßer Statorflansch 4, einmal von seiner Außenseite, Fig.3, und einmal von seiner Innenseite, Fig. 4, dargestellt. In Fig. 3-4 ist zu erkennen, dass der Statorflansch 4 eine Vielzahl von Durchgangslöchern 27, 28 bzw. Gewinde-Sacklöcher 32 aufweist, die paarweise nebeneinanderliegen und vorzugsweise viermal um 90° gegeneinander versetzt vorhanden sind. An ihrem äußeren Umfang weist der kreisförmige Statorflansch 4 die vertieft angeordneten Durchgangslöcher 27 auf, durch die, wie in Fig. 2 dargestellt, Befestigungsschrauben hindurchgesteckt werden, die zum Befestigen des Gehäuses 8 am Statorflansch 4 dienen. Weiterhin sind die Durchgangsbohrungen 28 vorgesehen, durch die, wie in Fig. 2 dargestellt, Schrauben durchgesteckt werden können, die zum Befestigen des Statorflansches 4 an einem externen Gehäuse oder dergleichen dienen können. Die Durchgangslöcher 27 und die Durchgangsbohrungen 28 liegen auf einem Umfangskreis mit einem derartigen Kreisradius um eine Mittelachse X-X des Statorteils 1, dass sie radial nach außen versetzt zu den Dichtungen 15 angeordnet sind, die innerhalb einer Dichtungsnut 31 im Statorflansch 4 angeordnet sind. Weiterhin weist der Statorflansch 4 in seinem mittleren Bereich Gewinde-Sacklöcher 32 auf, die zum äußeren Befestigen von Bauteilen am Statorflansch 4 dienen können und ebenfalls viermal um 90° versetzt sind. Durch die äußere Anordnung der Durchgangslöcher 27 und der Durchgangsbohrungen 28 und die Ausbildung als Sacklöcher wird vermieden, dass Feuchtigkeit in den Innenraum des erfindungsgemäßen Motors eindringen kann.

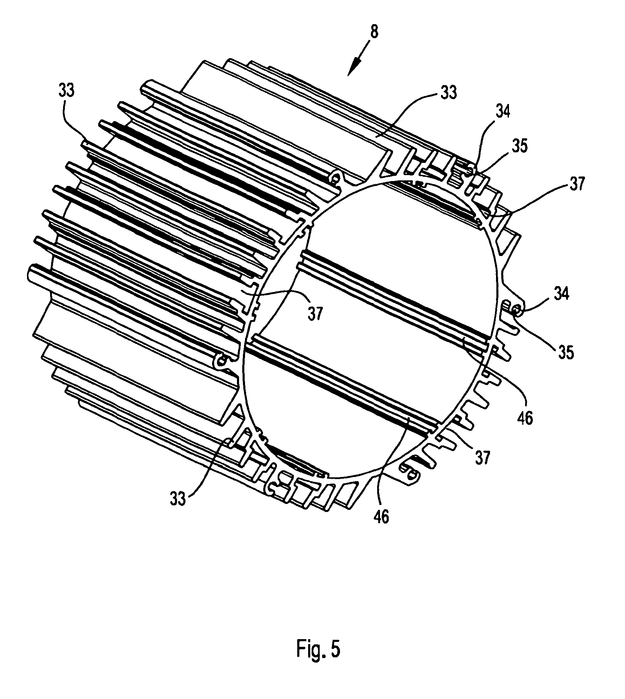

In Fig. 5 ist eine Ansicht eines erfindungsgemäßen Gehäuses 8 gezeigt. Wie sich hieraus ergibt, weist das erfindungsgemäße Gehäuse 8, das als Strangpressprofil ausgebildet ist, in Gehäuselängsrichtung über die gesamte Länge verlaufende, am Umfang verteilte Kühlrippen 33 auf. Weiterhin ist zu erkennen, dass an mehreren Kühlrippen 33 bogenförmige Ansätze 34 ausgebildet sind, die Öffnungen 35 umschließen, die zum Einschrauben der Befestigungsschrauben dienen. Weiterhin ist zu erkennen, dass zwischen einigen Kühlrippen 33 Befestigungsnuten 37 ausgebildet sind. In diese Befestigungsnuten 37 können, wie in Fig. 2 zu erkennen, Klemmsteine 38 eingeschoben werden, an denen Befestigungsflansche 39 angeschraubt werden können, womit der erfindungsgemäße Motor auf einer Unterlage befestigt werden kann. Durch die Ausbildung des erfindungsgemäßen Statorflansches 4 wird eine hohe mechanische Flexibilität für den jeweiligen Anwender erreicht, da die bei Normmotoren bekannten unterschiedlichen Flanschformen abgebildet werden, wobei auf die Realisierung von Abmessungen leistungsähnlicher Normmotoren geachtet worden ist. Das erfindungsgemäße Gehäuse 8, das als Distanzprofil des Motors wirkt, ist so aufgebaut, dass es den unterschiedlichen Leistungsanordnungen innerhalb einer Baugröße in seiner Länge angepasst werden kann. Vorteilhafterweise ist das erfindungsgemäße Gehäuse 8 als Aluminium-Strangpressprofil ausgebildet. Bei dem erfindungsgemäßen Elektromotor ist die Rotorwelle 3 im Bereich der Lager mit Kunststoff umspritzt.

In den Fig. 6a, 6b ist eine erfindungsgemäße Steckerschiene 22 mit eingeschobenen elektrischen Leitern 21 dargestellt. Die Steckerschiene 22 weist ein als Strangpressprofil aus einem aus isolierendem Kunststoff hergestelltes Zwischenprofilteil 25 auf und enthält die elektrischen Leiter 21, die zumindest endseitig als Flachprofile ausgebildet sind, und die endseitige Flachstecker bildenden Leiter 21 sind in Führungskanälen 23 der Steckerschiene 22, die einen an die Flachprofile angepassten Querschnitt besitzen, geführt und fixiert. Die Führungskanäle 23 weisen einseitig einen durchgehenden Längsschlitz 45 auf (s. Fig. 7), so dass sie aufweitbar sind. Um eine derartige Flexibilität zu erreichen, dass die Steckerschiene 22 selbst flexibel ausgebildet ist, so dass sie sich unterschiedlichen Durchmessern des Gehäuses 8 anpassen kann, sind zwischen den Führungskanälen 23 Materialschwächungen 41, beispielsweise als Filmscharniere oder formschlüssige Nut-Feder-Verbindungen, ausgebildet. Durch die erfindungsgemäße Ausgestaltung der Führungskanäle 23 können die elektrischen Leiter 21 nachträglich eingeschoben werden. An ihren beiden Enden, an denen die elektrischen Leiter 21 herausgeführt sind, sind auf das Zwischenprofilteil 25 Endkappen 42 aufgesteckt, die bogenförmig geformt sind und den Biegeradius der Steckerschiene 22 bestimmen. In den Endkappen 42 sind Öffnungen für den Durchtritt der elektrischen Leiter 21 mit ihren Kontaktenden vorgesehen. Die Endkappen 42 weisen einen Wandungsfortsatz auf, der im aufgesteckten Zustand das Zwischenprofilteil 25 an seiner Stirnseite umfasst. An den Längsrändern der Steckerschiene 22 sind Befestigungsfortsätze 43 angeformt. Deren Enden 44 sind derart geformt, dass sie bei der Montage der Steckerschiene 22 innerhalb des Gehäuses 8 in an der Innenseite des Gehäuses 8 ausgebildete Führungsnuten 46 (siehe Fig. 5) formschlüssig eingeschoben werden können. Weiterhin sind an den gegenüberliegenden Längsrändern der Endkappen 42 Montagekanäle 47 angeformt. In die endseitigen Öffnungen dieser Montagekanäle 47 werden Positionierungshilfen 48, die einerseits an der Motorleiterplatte 17 und andererseits an dem Zwischen- Isolationsteil 26 ausgebildet sind, eingeführt. Durch die erfindungsgemäße Ausgestaltung der Steckerschiene 22 ist die Steckerschiene 22 in der Länge variabel und kann den jeweiligen Gehäuseabmessungen durch einfaches Ablängen angepasst werden. Zudem ist die erfindungsgemäße Steckerschiene 22 auch in der Geometrie derart flexibel, dass es an alle Durchmesser des Gehäuses 8 angepasst werden kann.

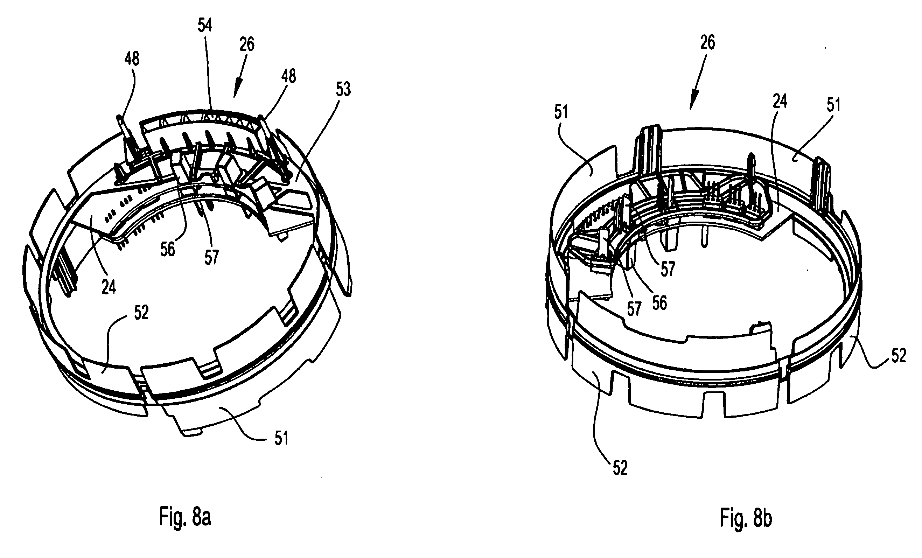

In Fig. 8a, b ist ein erfindungsgemäßes Zwischen-Isolationsteil 26 mit in diesem befestigter Adapter-Leiterplatte 24 dargestellt. Das Zwischen-Isolationsteil 26 ist ringförmig ausgebildet und besitzt einen an den Tragring 11 angepassten Durchmesser. Das Zwischen-Isolationsteil 26 wird in den Tragring 11 über eine Rastverbindung befestigt und taucht mit axial verlaufenden Wandungsabschnitten 51 in das Elektronikgehäuse 12 ein und mit gegenüberliegenden Wandungsabschnitten 52 in das Gehäuse 8. Hierdurch wird eine umfangsgemäße Isolation der Adapter-Leiterplatte 24 sowie der elektrischen Kontakte erreicht.Gleichzeitig dienen die Wandungsabschnitte 52 auch als Fügehilfen beim Montieren des erfindungsgemäßen Motors. Innerhalb des Zwischen-Isolationsteils 26 ist die Adapter-Leiterplatte 24 befestigt, wobei hierzu das Zwischen-Isolationsteil 26 einen Auflagebereich 53 besitzt. In diesem Auflagebereich 53 sind einerseits Steckertaschen 54 kreisbogenförmig angeordnet, und zwar entsprechend dem Verlauf der Steckerschiene 22, in denen die Gegenkontakte für die elektrischen Leiter 21 der Steckerschiene 22 angeordnet sind, sowie weiterhin Taschen 56 zur Aufnahme von Flachsteckern 57, die in der Adapter-Leiterplatte 24 vorhanden sind. Die Adapter-Leiterplatte 24 dient somit zum Verbinden der elektrischen Leiter 21 mit der Steuerschaltung 13 im Elektronikgehäuse 12. Der Tragring 11 weist seinerseits Durchgangslöcher 59 auf, durch die Befestigungsschrauben (nicht dargestellt) hindurchgesteckt werden können, die in die Öffnungen 35 am Gehäuse 8 eingeschraubt werden, wodurch der Tragring 11 mit dem Gehäuse 8 verbunden wird. Das Elektronikgehäuse 12 ist über Schrauben (nicht dargestellt) mit dem Tragring 11 verbunden. Die Abmessungen des Tragringes 11 ändern sich entsprechend dem Durchmesser des Elektronikgehäuses 12, und zwar auf der Seite des zu montierenden Elektronikgehäuses 12, wobei ebenfalls die Abmessungen der Adapter-Leiterplatte 24 angepasst werden. Alternativ kann auch durch eine entsprechende Ausgestaltung des erfindungsgemäßen Tragrings 11 eine Anpassung an unterschiedliche Durchmesser des Gehäuses 8 bei gleicher Dimensionierung des Elektronikgehäuses erfolgen.

Das Lüfterrad 16, s. Fig. 10, besteht aus einer Ronde 61 mit einer mittigen napfförmigen Vertiefung 62. In diese Vertiefung 62 ist die Rotorwelle eingepresst. Zwischen der Vertiefung 62 und dem Außenrand der Ronde 61 sind auf der dem Statorflansch 4 abgekehrten Seite der Ronde 61 Lüfterflügel 63 angeformt. Zum Befestigen am Rotorteil 2 kann am Außenrand der Ronde 61 oder am äußeren Ende eines Lüfterflügels 63 ein Befestigungsteil 64, z. B. ein Clips oder ein Befestigungsflansch, angeformt sein. In weiterer Ausgestaltung kann auf die äußere Stirnseite der Vertiefung 62 ein Aufnahmeteil 65 aufgebracht sein, in der ein Magnet eingesetzt werden kann. Ein derartiger Magnet kann zur Drehzahlmessung verwendet werden bzw. zur Positionsmessung. Hierzu ist in diesem Fall auf der Elektronikleiterplatte eine entsprechende Signal-Auswerteeinheit angeordnet. Das Aufnahmeteil 65 kann z. B. über eine Rastverbindung auf dem Lüfterrad 63 befestigbar sein, es kann aber auch an die Vertiefung 62 einstückig angeformt sein.

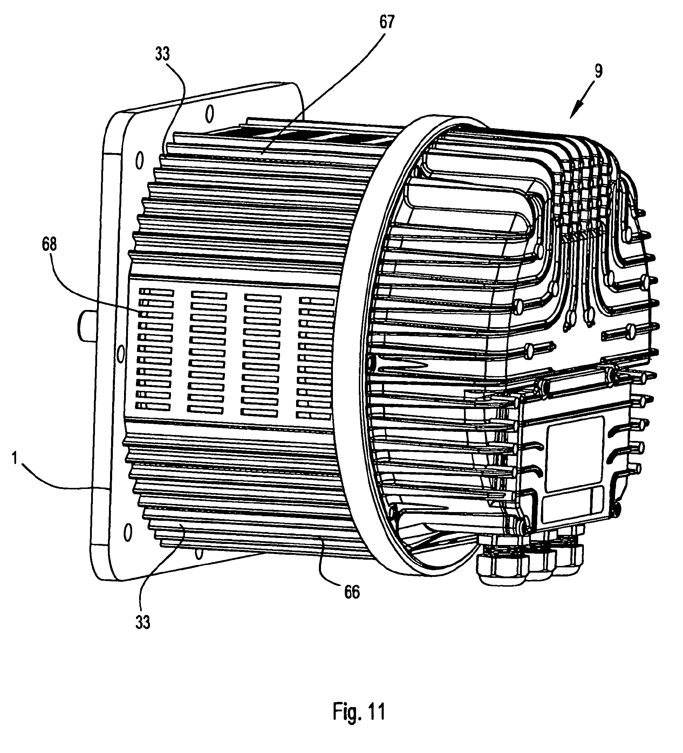

In Fig. 11 ist eine alternative Ausführungsform des Gehäuses 8 dargestellt. Hierbei besteht das Gehäuse 66 aus einer Vielzahl umfangsgemäß angeordneter, miteinander verbundener unterschiedlicher Seitenteile 67, 68. Das Seitenteil 67 oder die Seitenteile 67 sind geschlossen aufgeführt und weisen eine Rippenstruktur aus Kühlrippen 33 mit und ohne bogenförmige Ansätze 34 und mit oder ohne Befestigungsnuten 37 auf, wie dies zu den Figuren 1 bis 9 beschrieben ist. Das Seitenteil 68 oder die Seitenteile 68 bestehen aus geschlitzten bzw. perforierten Blechprofilen. Die Seitenteile 68 und 67 sind an ihren Längsrändern über Nut-Federverbindungen formschlüssig verbunden. Die Verwendung offener Seitenteile 68 führt zu einer besseren Kühlung des Motors, sie bedingt jedoch einen geringeren IP-Schutzgrad. Das segmentierte Gehäuse 66 kann aber auch ausschließlich aus geschlossenen Seitenteilen 67 zusammengesetzt sein.

## Patentansprüche

1. Elektromotor, insbesondere EC-Außenläufermotor bestehend aus einem Statorteil (1) und einem dieses umfassenden Außenläufer-Rotorteil (2), das mittels einer Rotorwelle (3) im Statorteil (1) drehbar gelagert ist, sowie einem einseitig am Statorteil (1) angeordneten Statorflansch (4) sowie am gegenüberliegenden Ende des Statorteils (1) angeordneten elektrischen Steuereinheiten (9) sowie einem zwischen dem Statorflansch (4) und der Steuereinheit (9) angeordneten Gehäuse (8), das das Rotorteil (2) umschließt, sowie aus einer am Statorflansch (4) angeordneten Motorleiterplatte (17), die über elektrische Leiter (21) mit der elektrischen Steuereinheit (9) elektrisch verbunden ist,
**dadurch gekennzeichnet, dass** das Gehäuse (8) als Strangpressprofilteil ausgebildet, und innerhalb des Gehäuses (8) zwischen dem Rotorteil (2) und einer Gehäuseinnenwandung eine Steckerschiene (22) angeordnet ist, die aus einem aus elektrisch isolierenden Material bestehenden, im Umfangsrichtung des Rotorteils (2) flexiblen, ein Zwischenprofilteil (25) bildenden Strangpressformteil besteht, das in Längsrichtung der Rotorwelle (3) verlaufende Führungskanäle (23) zum Führen und Fixieren der elektrischen Leiter (21) aufweist.

2. Elektromotor nach Anspruch 1,
**dadurch gekennzeichnet, dass** die elektrischen Leiter (21) als Flachprofile mit endseitigen Flachsteckem ausgebildet sind, und die Führungskanäle (23) einen hieran angepassten Querschnitt besitzen und an einer Längsseite einen Längsschlitz (45) aufweisen.

3. Elektromotor nach Anspruch 1 oder 2,
**dadurch gekennzeichnet, dass** im Wandbereich der Steckerschiene (22) zwischen den Führungskanälen (23) Materialschwächungen, z. B. Filmscharniere oder formschlüssige Nut-Federverbindungen ausgebildet sind.

4. Elektromotor nach einem der Ansprüche 1 bis 3,
**dadurch gekennzeichnet, dass** die Steckerschiene (22) an ihren beiden Stirnseiten, an denen die elektrischen Leiter (21) mit ihren Enden herausragen, aufsteckbare Endkappen (42) aufweist, in denen Durchtrittsöffnungen für die Enden der elektrischen Leiter (21) ausgebildet sind, und deren Biegeradius den Biegeradius der Steckerschiene bestimmt.

5. Elektromotor nach einem der Ansprüche 1 bis 4,
**dadurch gekennzeichnet, dass** die Endkappen (42) an ihren Endbereichen Montagekanäle (47) zur Aufnahme von Positionierungshilfen (48) aufweisen, die einerseits an der Motorleiterplatte (17) und andererseits an einem Zwischenisolationsteil (26) ausgebildet sind.

6. Elektromotor nach einem der Ansprüche 1 bis 5,
**dadurch gekennzeichnet, dass** auf den gegenüberliegenden Längsrändern der Steckerschiene (22) Befestigungsfortsätze (43) angeformt sind, deren Enden (44) derart geformt sind, dass sie bei der Montage der Steckerschiene (22) innerhalb des Gehäuses (8) in an dessen Innenseite ausgebildeten Führungsnuten (46) formschlüssig geführt sind.

7. Elektromotor nach einem der Ansprüche 1 bis 6,
**dadurch gekennzeichnet, dass** das Gehäuse (8) an seiner Außenseite in Längsrichtung verlaufende, am Umfang verteilte Kühlrippen (33) aufweist.

8. Elektromotor, nach einem der Ansprüche 1 bis 7,
**dadurch gekennzeichnet, dass** das Gehäuse (8) an den Kühlrippen (33) bogenförmige Ansätze (34) aufweist, die Öffnungen (35) umschließen, die zum Einschrauben von Befestigungsschrauben dienen.

9. Elektromotor nach einem oder mehreren der Ansprüche 1 bis 8,
**dadurch gekennzeichnet, dass** zwischen den ineinander verlaufenden Kühlrippen (33) Befestigungsnuten (37) ausgebildet sind, in die Klemmsteine (38) einschiebbar sind, an denen Befestigungsflansche (39) anschraubbar sind.

10. Elektromotor nach einem der Ansprüche 1 bis 9,
**dadurch gekennzeichnet, dass** das Gehäuse (8) und die Steckerschiene (22) jeweils derart als Strangpressprofile ausgebildet sind, dass eine Ablängung jeder beliebigen Länge ohne Veränderung der technischen Funktion möglich ist.

11. Elektromotor nach einem oder mehreren der Ansprüche 1 bis 10,
**dadurch gekennzeichnet, dass** derStatorflansch(4)eine Vielzahl von Durchgangslöchern (27, 28) und Gewinde-Sacklöchern (32) aufweist, wobei an seinem äußeren Umfang tiefer angeordnete Durchgangslöcher(27) sowie Durchgangsbohrungen (28) vorhanden sind, die auf einem Umfangskreis mit einem derartigen Radius um eine Mittelachse (X-X) **des** Statorteils verlaufen, dass sie radial nach außen versetzt zu Dichtungen (15) angeordnet sind, die zwischen dem Statorflansch (4) und Gehäuse (8) sowie zwischen einem Tragring (11) und dem Gehäuse (8) liegen.

12. Elektromotor nach einem der Ansprüche 1 bis 11,
**dadurch gekennzeichnet, dass** die Gewinde-Sacklöcher (32) im mittleren Bereich des Statorflansches (4) ausgebildet sind.

13. Elektromotor nach einem der Ansprüche 1 bis 12,
**dadurch gekennzeichnet, dass** an einem dem Statorflansch (4) gegenüberliegenden Ende die Steuereinheit (9) einerseits über den Tragring (11) mit dem Gehäuse (8) verbunden ist, und andererseits mit dem Tragring (11) das Elektronikgehäuse (12) befestigt ist.

14. Elektromotor nach einem der Ansprüche 1 bis 13,
**dadurch gekennzeichnet, dass** zwischen dem Tragring (11) und dem Elektronikgehäuse (12) eine Dichtung (15) angeordnet ist und der Tragring (11) Durchgangslöcher (59) aufweist, durch die Befestigungsschrauben verlaufen, die in Öffnungen (35) am Gehäuse (8) einschraubbar sind.

15. Elektromotor nach einem der Ansprüche 1 bis 14,
**dadurch gekennzeichnet, dass** am Tragring (11) ein Zwischenisolationsteil (26) mit in diesem befestigter Adapter-Leiterplatte (24) befestigt ist, wobei das Zwischenisolationsteil (26) ringförmig ist und an den Tragring (11) in Bezug auf den Durchmesser angepasst ist.

16. Elektromotor nach einem der Ansprüche 1 bis 15,
**dadurch gekennzeichnet, dass** das Zwischenisolationsteil (26) mit dem Tragring (11) über eine Rastverbindung befestigt ist und mit axial verlaufenden Wandungsabschnitten (51) in das Elektronikgehäuse (12) und mit gegenüberliegenden Wandungsabschnitten (52) in das Gehäuse (8) eintaucht.

17. Elektromotor nach einem der Ansprüche 1 bis 16,
**dadurch gekennzeichnet, dass** das Zwischenisolationsteil (26) einen Auflagebereich (53) zum Befestigen der Adapter-Leiterplatte (24) besitzt, in dem einerseits Steckertaschen (54) kreisbogenförmig angeordnet sind in Anpassung an den Verlauf der Steckerschiene (22) sowie weiterhin Taschen (56) zur Aufnahme von Flachsteckern (57), die in der Adapter-Leiterplatte (24) vorhanden sind.

18. Elektromotor nach einem der Ansprüche 1 bis 17,
**dadurch gekennzeichnet, dass** auf der Rotorwelle (3) an dem vom Statorflansch (4) entfernten Ende ein Lüfterrad (16) befestigt ist, das aus einer Ronde (61) mit einer mittigen napfförmigen Vertiefung (62) besteht, in die die Rotorwelle (3) eingepresst ist und zwischen der Vertiefung (62) und dem Außenrand der Ronde (61) auf der dem Statorflansch (4) abgekehrten Rondenfläche Lüfterflügel (63) ausgebildet sind.

19. Elektromotor nach einem der Ansprüche 1 bis 18,
**dadurch gekennzeichnet, dass** zum Befestigen am Rotorteil (2) am Außenrand der Ronde (61) oder am äußeren Ende eines Lüfterflügels (63) ein Befestigungsteil (64) ausgebildet ist.

20. Elektromotor nach einem der Ansprüche 1 bis 19,
**dadurch gekennzeichnet, dass** auf der äußeren Stirnseite der Vertiefung (62) des Lüfterrades (16) ein Aufnahmeteil (65) zur Aufnahme eines Magnetes angeordnet ist.

21. Elektromotor nach einem der Ansprüche 1 bis 20,
**dadurch gekennzeichnet, dass** das Gehäuse (66) des Elektromotors aus einer Vielzahl umfangsgemäß angeordneter, miteinander verbindbarer unterschiedlicher Seitenteile (67, 68) besteht, wobei die Seitenteile (67) geschlossen ausgeführt sind und eine Rippenstruktur gegebenenfalls aus Kühlrippen (33), mit und ohne bogenförmigen Ansätzen (34) und mit und ohne Befestigungsnuten (37) zwischen benachbarten Kühlrippen (33) aufweisen, und die Seitenteile (68) aus geschlitzten bzw. perforierten Blechprofilen bestehen.

## Claims

1. Electric motor, in particular EC external rotor motor, comprising a stator part (1) and an external rotor part (2) encompassing the stator part (1) and rotatably mounted by means of a rotor shaft (3) in the stator part (1), and a stator flange (4) arranged on one side of the stator part (1), and electric control units (9) arranged at the opposite end of the stator part (1), and a housing (8) arranged between the stator flange (4) and the control unit (9) and surrounding the rotor part (2), and a motor printed circuit board (17) arranged on the stator flange (4) and electrically connected to the electric control unit (9) via electric conductors (21),
**characterised in that** the housing (8) is formed as an extruded profile part, and arranged inside the housing (8) between the rotor part (2) and a housing inner wall is a connector rail (22) comprising an extruded shaped part which is made of electrically insulating material, is flexible in the circumferential direction of the rotor part (2) and constitutes an intermediate profile part (25), and which has guide channels (23), running in the longitudinal direction of the rotor shaft (3), for guiding and fixing the electric conductors (21).

2. Electric motor according to Claim 1,
**characterised in that** the electric conductors (21) are formed as flat profiles with flat connectors at the ends, and the guide channels (23) have a cross-section adapted thereto and a longitudinal slot (45) on one longitudinal side.

3. Electric motor according to Claim 1 or 2,
**characterised in that** material weaknesses, e.g. film hinges or form-locked tongue-and-groove connections, are formed in the wall region of the connector rail (22) between the guide channels (23).

4. Electric motor according to one of Claims 1 to 3,
**characterised in that** the connector rail (22) has, at its two end sides at which the electric conductors (21) project with their ends, plug-on end caps (42) in which through-openings for the ends of the electric conductors (21) are formed, and of which the bending radius determines the bending radius of the connector rail.

5. Electric motor according to one of Claims 1 to 4,
**characterised in that** the end caps (42) have at their end regions mounting channels (47) for receiving positioning aids (48) which are formed, on the one hand, on the motor printed circuit board (17) and, on the other hand, on an intermediate insulation part (26).

6. Electric motor according to one of Claims 1 to 5,
**characterised in that** fastening projections (43) are integrally formed on the opposite longitudinal edges of the connector rail (22), the ends (44) of which projections are shaped in such a way that, on mounting the connector rail (22) inside the housing (8) they are guided in a form-locked manner in guide grooves (46) formed on the inside of the housing (8).

7. Electric motor according to one of Claims 1 to 6,
**characterised in that** the housing (8) has cooling ribs (33) running in the longitudinal direction on its outside and distributed on the circumference.

8. Electric motor according to one of Claims 1 to 7,
**characterised in that** the housing (8) has on the cooling ribs (33) arcuate attachments (34), enclosing openings (35) which serve for screwing-in fastening screws.

9. Electric motor according to one or more of Claims 1 to 8,
**characterised in that** fastening grooves (37) are formed between the cooling ribs (33) running in one another, into which grooves can be inserted clamping blocks (38) onto which fastening flanges (39) can be screwed.

10. Electric motor according to one of Claims 1 to 9,
**characterised in that** the housing (8) and the connector rail (22) are each formed as extruded profiles in such a way that cutting into sections of any desired length is possible without altering the technical function.

11. Electric motor according to one or more of Claims 1 to 10,
**characterised in that** the stator flange (4) has a multiplicity of through-holes (27, 28) and threaded blind holes (32), there being provided at its outer circumference recessed through-holes (27) and also through-bores (28) which run on a circumferential circle with such a radius about a centre axis (X-X) of the stator part that they are arranged radially outwardly offset with respect to seals (15) lying between the stator flange (4) and housing (8) and between a supporting ring (11) and the housing (8).

12. Electric motor according to one of Claims 1 to 11,
**characterised in that** the threaded blind holes (32) are formed in the central region of the stator flange (4).

13. Electric motor according to one of Claims 1 to 12,
**characterised in that**, at an end opposite the stator flange (4), the control unit (9) on the one hand is connected via the supporting ring (11) to the housing (8) and on the other hand the electronics housing (12) is fastened with the supporting ring (11).

14. Electric motor according to one of Claims 1 to 13,
**characterised in that** a seal (15) is arranged between the supporting ring (11) and the electronics housing (12) and the supporting ring (11) has through-holes (59), through which extend fastening screws which can be screwed into openings (35) on the housing (8).

15. Electric motor according to one of Claims 1 to 14,
**characterised in that** an intermediate insulation part (26) with adapter printed circuit board (24) fastened therein is fastened to the supporting ring (11), the intermediate insulation part (26) being annular and adapted to the supporting ring (11) with respect to the diameter.

16. Electric motor according to one of Claims 1 to 15,
**characterised in that** the intermediate insulation part (26) is fastened to the supporting ring (11) via a latching connection and penetrates with axially running wall sections (51) into the electronics housing (12) and with opposite wall sections (52) into the housing (8).

17. Electric motor according to one of Claims 1 to 16,
**characterised in that** the intermediate insulation part (26) has a bearing region (53) for fastening the adapter printed circuit board (24), in which region on the one hand connector pockets (54) are arranged in a circular-arc shape adapted to the course of the connector rail (22), and furthermore pockets (56) for receiving flat connectors (57) which are present in the adapter printed circuit board (24).

18. Electric motor according to one of Claims 1 to 17,
**characterised in that** a fan wheel (16) is fastened on the rotor shaft (3) at the end remote from the stator flange (4), which wheel comprises a round plate (61) with a central cup-shaped depression (62) into which the rotor shaft (3) is pressed, and between the depression (62) and the outer edge of the round plate (61) on the surface of the round plate facing away from the stator flange (4) are formed fan blades (63).

19. Electric motor according to one of Claims 1 to 18,
**characterised in that** for fastening to the rotor part (2) a fastening part (64) is formed on the outer edge of the round plate (61) or on the outer end of a fan blade (63).

20. Electric motor according to one of Claims 1 to 19,
**characterised in that** a receiving part (65) for receiving a magnet is arranged on the outer end side of the depression (62) of the fan wheel (16).

21. Electric motor according to one of Claims 1 to 20,
**characterised in that** the housing (66) of the electric motor comprises a multiplicity of circumferentially arranged, interconnectable different side parts (67, 68), the side parts (67) being of closed design and having a rib structure optionally of cooling ribs (33), with and without arcuate attachments (34) and with and without fastening grooves (37) between adjacent cooling ribs (33), and the side parts (68) comprise slotted or perforated sheet-metal profiles.

## Revendications

1. Moteur électrique, plus particulièrement moteur à rotor externe EC, constitué d'une partie stator (1) et d'une partie rotor externe (2) entourant celle-ci, et qui est logée de manière rotative dans la partie stator (1) à l'aide d'un arbre de rotor (3), ainsi que d'une bride de stator (4) disposée d'un côté sur la partie stator (1), ainsi que d'unités de commande (9) électriques disposées à l'extrémité opposée de la partie stator (1), ainsi que d'un carter (8), disposé entre la bride de stator (4) et l'unité de commande (9), qui entoure la partie rotor (2), ainsi que d'un circuit imprimé de commande électrique de moteur (17) disposé sur la bride de stator (4), relié électriquement, à l'aide de conducteurs électriques (21), à l'unité de commande électrique (9), **caractérisé en ce que** le carter (8) est conçu sous la forme d'un profilé extrudé et, à l'intérieur du carter (8), entre la partie rotor (2) et une paroi interne du carter se trouve un rail de connexion (22) constitué d'une pièce extrudée constituée d'un matériau électriquement isolant, flexible sur la périphérie de la partie rotor (2) et formant une pièce profilée intermédiaire (25), cette pièce présentant, dans la direction longitudinale de l'arbre du rotor (3), des canaux de guidage (23) permettant de guider les conducteurs électriques (21).

2. Moteur électrique selon la revendication 1, **caractérisé en ce que** les conducteurs électriques (21) sont conçus sous la forme de profilés plats avec des connecteurs plats aux extrémités et les canaux de guidage (23) possèdent une section adaptée et sont munis d'une fente longitudinale (45) sur un côté longitudinal.

3. Moteur électrique selon la revendication 1 ou 2, **caractérisé en ce que**, dans la paroi du rail de connexion (22), entre les canaux de guidage (23), sont réalisés des affaiblissements du matériau, par exemple des films charnières ou des liaisons à rainures et languettes avec complémentarité de forme.

4. Moteur électrique selon l'une quelconque des revendications 1 à 3, **caractérisé en ce que** le rail de connexion (22) présente, sur ses deux côtés frontaux, au niveau desquels les conducteurs électriques (21) font saillie avec leurs extrémités, des embouts enfichables (42) dans lesquels sont réalisées des ouvertures de passage pour les extrémités des conducteurs électriques (21) et dont le rayon de flexion détermine celui du rail de connexion.

5. Moteur électrique selon l'une quelconque des revendications 1 à 4, **caractérisé en ce que** les embouts (42) présentent, à leurs extrémités, des canaux de montage (47) permettant de loger des éléments d'aide au positionnement (48), réalisés d'une part sur le circuit imprimé du moteur (17) et d'autre part sur une pièce d'isolation intermédiaire (26).

6. Moteur électrique selon l'une quelconque des revendications 1 à 5, **caractérisé en ce que**, sur les bords longitudinaux opposés du rail de connexion (22), sont moulés des prolongements de fixation (43) dont les extrémités (44) présentent une forme telle que, lors du montage du rail de connexion (22) à l'intérieur du carter (8), ils sont guidés, avec une complémentarité de forme, au niveau de rainures de guidage (46) réalisées sur sa face interne.

7. Moteur électrique selon l'une quelconque des revendications 1 à 6, **caractérisé en ce que** le carter (8) présente, sur son côté extérieur, des ailettes de refroidissement (33) réparties sur sa périphérie et s'étendant dans la direction longitudinale.

8. Moteur électrique selon l'une quelconque des revendications 1 à 7, **caractérisé en ce que** le carter (8) présente, au niveau des ailettes de refroidissement (33), des bossages incurvés (34) entourant des ouvertures (35) servant au vissage de vis de fixation.

9. Moteur électrique selon l'une quelconque des revendications 1 à 8, **caractérisé en ce que**, entre les ailettes de refroidissement (33) s'étendant les lunes dans les autres, sont réalisées des rainures de fixation (37) dans lesquelles il est possible d'insérer des blocs (38) sur lesquels des brides de fixation (39) peuvent être vissées.

10. Moteur électrique selon l'une quelconque des revendications 1 à 9, **caractérisé en ce que** le carter (8) et le rail de connexion (22) sont conçus comme des profilés extrudés, de telle sorte qu'une découpe à une longueur quelconque soit possible sans en modifier la fonction technique.

11. Moteur électrique selon l'une quelconque ou plusieurs des revendications 1 à 10, **caractérisé en ce que** la bride du stator (4) présente une pluralité de trous traversants (27, 28) et de trous filetés borgnes (32), dans lequel, sur sa périphérie externe, se trouvent des trous traversants (27) ainsi que des alésages traversants (28) répartis sur un cercle périphérique autour d'un axe central (X-X) de la partie stator avec un rayon tel qu'ils sont décalés radialement vers l'extérieur par rapport à des joints d'étanchéité (15) qui se trouvent entre la bride du stator (4) et le carter (8) ainsi qu'entre une bague de support (11) et le carter (8).

12. Moteur électrique selon l'une quelconque ou plusieurs des revendications 1 à 11, **caractérisé en ce que** des trous borgnes (32) sont réalisés au centre de la bride du stator (4).

13. Moteur électrique selon l'une quelconque ou plusieurs des revendications 1 à 12, **caractérisé en ce que**, au niveau d'une extrémité opposée à la bride du stator (4), d'une part l'unité de commande (9) est reliée au carter (8) à l'aide de la bague de support (11) et d'autre part le boîtier électronique (12) est fixé avec la bague de support (11).

14. Moteur électrique selon l'une quelconque ou plusieurs des revendications 1 à 13, **caractérisé en ce que**, entre la bague de support (11) et le boîtier électronique (12) se trouve un joint d'étanchéité (15) et la bague de support (11) présente des trous traversants (59), à travers lesquels passent les vis de fixation qui peuvent être vissées dans des ouvertures (35) sur le carter (8).

15. Moteur électrique selon l'une quelconque ou plusieurs des revendications 1 à 14, **caractérisé en ce que**, sur la bague de support (11), est fixée une pièce d'isolation intermédiaire (26) avec un circuit imprimé adaptateur (24) fixé dans celle-ci, dans lequel la pièce d'isolation intermédiaire (26) est de forme annulaire et adaptée à la bague de support (11) en ce qui concerne le diamètre.

16. Moteur électrique selon l'une quelconque ou plusieurs des revendications 1 à 15, **caractérisé en ce que** la pièce d'isolation intermédiaire (26) est fixée avec la bague de support (11) à l'aide d'une liaison par encliquetage et dépasse dans le boîtier électronique (12) avec des sections de parois axiales (51) et dans le carter (8) avec des sections de parois opposées (52).

17. Moteur électrique selon l'une quelconque ou plusieurs des revendications 1 à 16, **caractérisé en ce que** la pièce d'isolation intermédiaire (26) présente une zone d'appui (53) pour la fixation du circuit imprimé adaptateur (24), sur laquelle sont disposées des poches de connexion (54) en arc de cercle, de manière adaptée au rail de connexion (22) ainsi que d'autres poches (56) permettant de loger des connecteurs plats (57) existants dans le circuit imprimé adaptateur (24).

18. Moteur électrique selon l'une quelconque ou plusieurs des revendications 1 à 17, **caractérisé en ce que**, sur l'arbre du rotor (3), au niveau de l'extrémité éloignée de la bride du stator (4), est fixée une roue de ventilateur (16) constituée d'une tôle ronde (61) avec une cavité centrale en forme de godet (62), dans laquelle est pressée l'arbre du rotor (3) et, entre la cavité (62) et la bordure extérieure de la tôle ronde (61), sur sa face opposée à la bride du stator (4), sont réalisées des pales de ventilateur (63).

19. Moteur électrique selon l'une quelconque ou plusieurs des revendications 1 à 18, **caractérisé en ce que**, pour la fixation sur la partie rotor (2) sur la bordure extérieure de la tôle ronde (61) ou à l'extrémité extérieure d'une pale de ventilateur (63), une pièce de fixation (64) est prévue.

20. Moteur électrique selon l'une ou plusieurs des revendications 1 à 19, **caractérisé en ce que**, sur le côté frontal externe de la cavité (62) de la roue de ventilateur (16) se trouve une partie de logement (65) permettant de loger un aimant.

21. Moteur électrique selon l'une ou plusieurs des revendications 1 à 20, **caractérisé en ce que** le carter (66) du moteur électrique est constitué d'une pluralité de pièces latérales (67, 68) différentes, disposées sur la périphérie et pouvant être reliées entre elles, dans lequel les pièces latérales (67) sont réalisées de manière fermée et présentent une structure nervurée, le cas échant avec des ailettes de refroidissement (33), avec et sans bossages incurvés (34) et avec et sans rainures de fixation (37) entre des ailettes de refroidissement (33) adjacentes, et dans lequel les pièces latérales (68) sont constituées de profilés en tôle fendus ou perforés.
